# EUROPEAN PATENT APPLICATION

(11) **EP 3 300 790 A1**
(43) Date of publication of application: **04.04.2018**
(21) Application number: 16786440.4
(22) Date of filing: 25.04.2016
(51) Int. Cl.: B01D 53/50, B01D 53/80, C02F 1/66

(54) **METHOD AND DEVICE FOR TREATING WASTEWATER FROM GAS-COOLER CLEANING**

(30) Priority: 27.04.2015 JP 2015090478
(71) Applicant: Mitsubishi Hitachi Power Systems, Ltd., Yokohama-shi, Kanagawa 220-8401 (JP)
(72) Inventor: OMINE, Naruhito, Yokohama-shi Kanagawa 220-8401 (JP); ABE, Junji, Yokohama-shi Kanagawa 220-8401 (JP); HIGASHI, Hideaki, Yokohama-shi Kanagawa 220-8401 (JP)
(74) Representative: Henkel, Breuer & Partner
(86) International application number: PCT/JP2016/062876
(87) International publication number: WO 2016/175163

(57) **Abstract**

The present invention relates to a flue-gas desulfurization system in which a discharge-gas heat recovery device 2 has been disposed in a discharge-gas passage that precedes a desulfurization device 1, wherein wastewater from heat recovery device 2 cleaning is neutralized with a large excess of limestone in a limestone slurry tank 7, and Al matter dissolved away from the coal ash contained in the wastewater from cleaning is solidified. Since the limestone slurry contains no fluorine matter, the limestone is not masked even when the wastewater from heat recovery device 2 cleaning is supplied to the limestone slurry tank 7. Furthermore, since the wastewater from heat recovery device 2 cleaning has been neutralized in the limestone slurry tank 7, no local decrease in pH occurs in the absorption liquid even when the limestone slurry within the tank 7 is supplied to the desulfurization device 1. Hence, the Al matter in the desulfurization/absorption liquid can be inhibited from reacting with fluorine matter. Consequently, in the present invention, the wastewater from gas-cooler cleaning can be treated in a desulfurization device with a minimum equipment configuration at low cost without lowering the reactivity of the limestone, thereby enabling the desulfurization device to be continuously operated.

## Description

### Technical Field

The present invention relates to a method for treating wastewater generated from a thermal power generation plant, and more particularly to a method and a device for treating wastewater from a gas cooler cleaning without decreasing a reactivity of limestone used as a desulfurizing agent, when introducing cleaning wastewater from a gas cooler having a high temperature and a low pH into a desulfurization/absorption tower.

### [Background Art]

An exhaust gas treatment system of a thermal power generation plant includes a denitration device, a dust collector, a desulfurization device and the like. In order to effectively utilize exhaust gas heat and reduce water consumption in a wet desulfurization device, a gas cooler is installed therein. In the gas cooler, heat exchange between cooling water and exhaust gas is performed via a heat transfer pipe.

The exhaust gas discharged from a boiler contains sulfur oxides according to a content of sulfur in a fuel. Most of the sulfur oxides are SO₂, but a part thereof becomes SO₃ by oxidization in the boiler and oxidization on a catalyst of the denitration device. The SO₃ is in gaseous form, and is introduced into the gas cooler, but is condensed due to a decrease in a temperature of the exhaust gas in the gas cooler to become a sulfuric acid mist, and a part thereof is adhered to the heat transfer pipe of the gas cooler.

In a low-low temperature ESP system in which the gas cooler is installed in an exhaust gas flow passage at a front stage of a dust removal device installed in the exhaust gas flow passage discharged from the boiler, a concentration of ash dust in the exhaust gas introduced into the gas cooler is high, and an amount of ash adhered to the heat transfer pipe in the gas cooler is also large, hence the SO₃ mist adhered to the heat transfer pipe is neutralized by an alkaline component in the ash.

However, when heavy oil is used as a boiler fuel or when the gas cooler is installed in the exhaust gas flow passage on a rear stage side of the dust removal device, the concentration of ash dust in the exhaust gas introduced into the gas cooler is low, and an amount of ash adhered to the heat transfer pipe in the gas cooler is decreased, such that neutralization of SO₃ by the alkaline component in the ash cannot be expected.

Ash and sulfuric acid mist adhered to the heat transfer pipe of the gas cooler are cleaned by soot blow and water spray. In particular, when the concentration of ash dust in the exhaust gas from the gas cooler is low and the sulfuric acid mist adhered to the heat transfer pipe cannot be neutralized by alkali in the ash as described above, since adhesion of the sulfuric acid mist to the heat transfer pipe is strong, the heat transfer pipe is cleaned by spraying with water, and the cleaning wastewater may flow into the desulfurization/absorption tower as makeup water (Patent Document 1).

At this time, the cleaning wastewater reaches a high temperature due to contact with the heat transfer pipe at about 100°C, and the pH is decreased due to sulfuric acid mist adhered to the heat transfer pipe. Since the cleaning frequency of the heat transfer pipe involves executing the spraying with water for several minutes several times per day, a large quantity of cleaning wastewater is only intermittently generated, but the cleaning wastewater is always generated during an operation of the device.

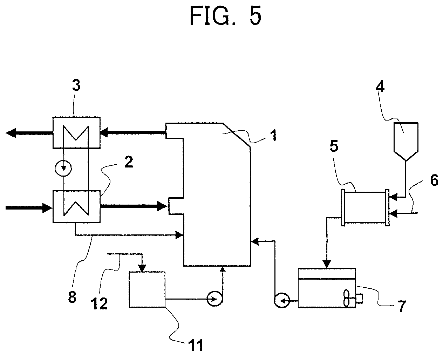

FIG. 5 is a view illustrating a method for treating wastewater from a gas cooler cleaning in a wet desulfurization device using a conventional technology, and the cleaning wastewater of the heat recovery device (gas cooler) 2 disposed in an exhaust gas flow passage on an upstream side of the wet desulfurization device (desulfurization/absorption tower) 1 is supplied to the wet desulfurization device 1. Limestone slurry is supplied as a desulfurizing agent to the wet desulfurization device 1. Limestone from a limestone silo 4 is crushed by a wet ball mill 5, and once, the limestone slurry is stored in a limestone slurry tank 7, then is sequentially supplied to the wet desulfurization device 1. Further, heat exchange is performed by a heat medium between the heat recovery device 2 and an exhaust gas reheater 3 provided in the exhaust gas flow passage at an outlet of the wet desulfurization device 1.

Herein, there is a phenomenon that a reactivity of limestone is decreased as one of problems occurring during an operation of the wet desulfurization device 1. It is understood that this phenomenon occurs because a fluorine component (F) absorbed by gas-liquid contacting with the exhaust gas and an aluminum component (Al) eluted from coal ash flowing into the wet desulfurization device 1 react with each other in a desulfurization absorption liquid, and an insoluble compound is generated to mask a surface of the limestone. This phenomenon of reducing the reactivity of the limestone may be recognized, for example, when a large quantity of fly ash flows into the wet desulfurization device 1 due to a malfunction of a dust removal device installed upstream of the wet desulfurization device 1.

In a case in which the wastewater from the gas cooler 2 cleaning, which is aimed in the present invention, flows into the desulfurization absorption liquid, since the cleaning wastewater is at a low pH, the pH of the desulfurization absorption liquid is locally decreased in a recirculation tank provided under the desulfurization/absorption tower 1, and is diffused to the entire recirculation tank while the pH is recovered by the limestone supplied as the desulfurizing agent. However, at this time, the aluminum component is contained in a dissolved state in the wastewater from the gas cooler 2 cleaning, and in addition thereto, the pH of the desulfurization absorption liquid is decreased by the flowing of the cleaning wastewater with a low pH, such that a reaction between the aluminum component and the fluorine component may easily occur due to dissolution of CaF₂ in the desulfurization absorption liquid, and a decrease in the reactivity of the limestone is promoted.

When such a decrease in the reactivity of the limestone occurs, conventionally, an alkaline agent addition device 11 containing an alkaline agent 12 such as NaOH or Ca(OH)₂ used for wastewater treatment is installed as a backup, and the alkaline agent 12 is added to the wet desulfurization device (desulfurization/absorption tower) 1 to forcibly raise the pH, and the eluted aluminum component is precipitated, thereby eliminating a decrease in the reactivity of the limestone.

However, in such a conventional method, it is effective against a decrease in the reactivity of the limestone due to a large quantity of fly ash flowing into the wet desulfurization device 1 temporarily due to the malfunction of the dust removal device, or the like, but it is not a permanent measure for receiving the wastewater from the gas cooler cleaning by the wet desulfurization device (desulfurization/absorption tower) 1 as described in Patent Document 1. In addition, equipment costs of the alkaline agent addition device 11 are required, as well as, costs of the NaOH or Ca(OH)₂ are also required.

### Prior Art Document

### Patent Document

[Patent Document 1] Japanese Unexamined Patent Application Publication No. 2000-325744

### Summary of Invention

### Technical Problem

When the wastewater from the gas cooler (exhaust gas heat recovery device) 2 cleaning flows into the wet desulfurization device (desulfurization/absorption tower) 1, the aluminum component eluted from the coal ash contained in the cleaning wastewater and the fluorine component removed by gas absorption will continuously flow into the wet desulfurization device (desulfurization/absorption tower) 1, which is not a sufficient permanent measure in the conventional method.

Once a decrease in the reactivity of the limestone occurs, it is impossible to control the pH of the desulfurization absorption liquid, thereby causing a deterioration in a desulfurization performance of the wet desulfurization device 1, as well as, interfering with the continuous operation of the wet desulfurization device (desulfurization/absorption tower) 1.

It is an object of the present invention to provide a method and a device for treating wastewater from a gas cooler cleaning, which are capable of continuously operating a wet desulfurization device by treating the wastewater from the gas cooler cleaning without decreasing a reactivity of limestone with a minimal equipment configuration at a reduced cost.

### Solution to Problem

The above object is achieved by the following means.

A first aspect of the present invention provides a method for removing sulfur oxide from a combustion exhaust gas, in which the combustion exhaust gas is cooled by a gas cooler (2), and then comes into gas-liquid contact with a spray desulfurizing agent in a desulfurization/absorption tower (1), a method for treating wastewater from a gas cooler cleaning including: cleaning the gas cooler (2) with cleaning water; and neutralizing the wastewater obtained from the gas cooler cleaning with a desulfurizing agent including slurry-like limestone or finely powdered limestone prior to desulfurizing the sulfur oxide in the combustion exhaust gas.

A second aspect of the present invention provides the method for treating wastewater from a gas cooler cleaning according to the first aspect of the present invention, wherein an amount of the desulfurizing agent to be mixed with the wastewater from the gas cooler (2) cleaning is based on a pH of the wastewater from the gas cooler cleaning after mixing.

A third aspect of the present invention provides the method for treating wastewater from a gas cooler cleaning according to the first or second aspect of the present invention, wherein a mixture of the wastewater from the gas cooler (2) cleaning and the desulfurizing agent is continuously supplied to the desulfurization/absorption tower (1).

A fourth aspect of the present invention provides the method for treating wastewater from a gas cooler cleaning according to any one of the first to third aspects of the present invention, the method further includes: separating a solid contained in the mixture of the cleaning wastewater and the desulfurizing agent after the wastewater from the gas cooler (2) cleaning is neutralized with the desulfurizing agent to continuously supply the separated solid to desulfurization/absorption tower (1).

A fifth aspect of the present invention provides a device for treating wastewater from a gas cooler cleaning including: a gas cooler (2) configured to cool a combustion exhaust gas; a desulfurizing agent storage tank (7) configured to store a desulfurizing agent including slurry-like limestone for desulfurizing the combustion exhaust gas cooled by the gas cooler (2); a limestone crushing mill (5) configured to crush the limestone; and a desulfurization/absorption tower (1) configured to spray a desulfurization absorption liquid containing the desulfurizing agent supplied from the desulfurizing agent storage tank (7) via a first desulfurizing agent supply path (14) to bring it into gas-liquid contact with the combustion exhaust gas, and further including: a cleaning wastewater tank (9) configured to store the wastewater resulted from the gas cooler (2) cleaned with cleaning water; a third desulfurizing agent supply path (16) configured to supply the desulfurizing agent from the limestone crushing mill (5) or from the desulfurizing agent storage tank (7) to the cleaning wastewater tank (9) while adjusting a pH thereof; and a second desulfurizing agent supply path (15) configured to supply a mixture of the wastewater from the gas cooler cleaning and the desulfurizing agent from the cleaning wastewater tank (9) to the desulfurization/absorption tower (1).

A sixth aspect of the present invention provides the device for treating wastewater from a gas cooler cleaning according to the fifth aspect of the present invention, wherein a solid-liquid separator (not illustrated) configured to separate sludge discharged from the cleaning wastewater tank (9) after the pH adjustment is provided in the cleaning wastewater tank (9) or separately from the cleaning wastewater tank (9).

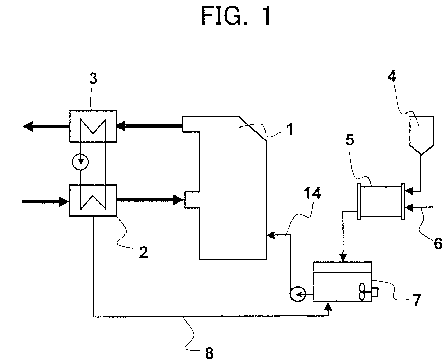

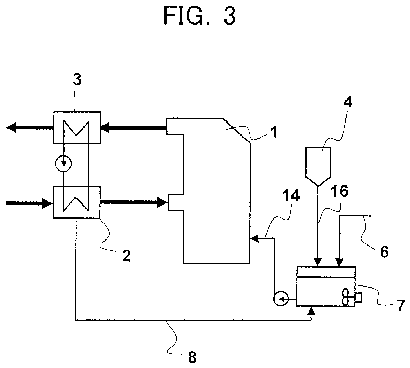

A seventh aspect of the present invention provides a device for treating wastewater from a gas cooler cleaning including: a gas cooler (2) configured to cool a combustion exhaust gas; a desulfurizing agent storage tank (7) configured to store a desulfurizing agent including slurry-like limestone or finely powdered limestone for desulfurizing the combustion exhaust gas cooled by the gas cooler (2); and a desulfurization/absorption tower (1) configured to spray a desulfurization absorption liquid containing the desulfurizing agent supplied from the desulfurizing agent storage tank (7) via a first desulfurizing agent supply path (14) to bring it into gas-liquid contact with the combustion exhaust gas, and further including: a cleaning wastewater supply path (8) configured to supply the wastewater resulted from the gas cooler (2) cleaned with cleaning water to the desulfurizing agent storage tank (7) (see FIGS. 1 and 3).

An eighth aspect of the present invention provides a device for treating wastewater from a gas cooler cleaning including: a gas cooler (2) configured to cool a combustion exhaust gas; a finely powdered limestone silo (4) configured to store finely powdered limestone for desulfurizing the combustion exhaust gas cooled by the gas cooler (2); and a desulfurization/absorption tower (1) configured to spray the finely powdered limestone supplied from the finely powdered limestone silo (4) via a first desulfurizing agent supply path (14) as a desulfurizing agent to bring it into gas-liquid contact with the combustion exhaust gas, and further including: a cleaning wastewater tank (9) configured to store the wastewater resulted from the gas cooler (2) cleaned with cleaning water; a third desulfurizing agent supply path (16) provided to supply the finely powdered limestone from the finely powdered limestone silo (4) to the cleaning wastewater tank (9) while adjusting a pH thereof; and a second desulfurizing agent supply path (15) configured to supply a mixture of the cleaning wastewater from the cleaning wastewater tank (9) and the finely powdered limestone to the desulfurization/absorption tower (1).

A ninth aspect of the present invention provides the device for treating wastewater from a gas cooler cleaning according to the eighth aspect of the present invention, wherein a solid-liquid separator (not illustrated) configured to separate sludge discharged from the cleaning wastewater tank (9) after the pH adjustment is provided in the cleaning wastewater tank (9) or separately from the cleaning wastewater tank (9).

The present invention has the following functions. That is, by treating the wastewater from the gas cooler (2) cleaning with the limestone used as the desulfurizing agent in the desulfurization device (desulfurization/absorption tower) (1), it is not necessary to install a relatively expensive device for adding an alkaline agent such as NaOH or Ca(OH)₂ which has been added to the desulfurization absorption liquid when a reactivity of the limestone is decreased conventionally.

In addition, by increasing the pH of the cleaning wastewater with the limestone, the aluminum component eluted from the coal ash contained in the wastewater from the gas cooler cleaning is solidified as a solid, and when the wastewater from the gas cooler cleaning is supplied to the desulfurization/absorption tower, a local decrease in the pH of the absorption liquid does not occur, and it is difficult to dissolve the CaF₂ contained in the desulfurization absorption liquid, such that the aluminum component in the wastewater from the gas cooler (2) cleaning and the fluorine component in the desulfurization absorption liquid do not react with each other, thereby preventing the limestone from being masked.

As described above, in the present invention, by continuously treating the wastewater from the gas cooler (2) cleaning using the limestone used as the desulfurizing agent, it is possible to constantly prevent a decrease in the reactivity of the limestone due to the aluminum component and the fluorine component.

### Advantageous Effects of Invention

In accordance with the inventions according to the first, fifth, seventh and eighth aspects of the present invention, by treating the wastewater from the gas cooler (2) cleaning with the limestone, the pH of the cleaning wastewater is increased by the limestone, and the aluminum component (Al) eluted from the coal ash in the wastewater from the gas cooler cleaning is solidified as a solid. Therefore, even when supplying the wastewater from the gas cooler cleaning together with the limestone to desulfurization/absorption tower (1), a local decrease in the pH of the absorption liquid does not occur, and it is difficult to dissolve the CaF₂ contained in the desulfurization absorption liquid, such that the aluminum component and the fluorine component do not react with each other, thereby preventing the limestone from being masked.

In addition, it is not necessary to install a relatively expensive device for adding an alkaline agent such as NaOH or Ca(OH)₂ which has been added to the desulfurization absorption liquid when the reactivity of the limestone is decreased conventionally.

In accordance with the inventions according to the second, fifth and eighth aspects of the present invention, a part of a large quantity of the desulfurizing agent used for desulfurization treatment of the combustion exhaust gas is used to neutralize the wastewater from the gas cooler (2) cleaning while adjusting the pH thereof, such that the wastewater from the gas cooler (2) cleaning may also be used for desulfurizing the combustion exhaust gas, while avoiding waste of the desulfurizing agent.

In accordance with the inventions according to the third, fifth, seventh and eighth aspects of the present invention, the wastewater from the gas cooler (2) cleaning is neutralized with the desulfurizing agent, and the mixture of the cleaning wastewater and the desulfurizing agent is continuously supplied to the desulfurization/absorption tower (1), such that it is possible to constantly prevent a decrease in the reactivity of the limestone due to the aluminum component and the fluorine component.

In accordance with the inventions according to the fourth, sixth and ninth aspects of the present invention, the aluminum component eluted from ash dust brought by the wastewater from the gas cooler (2) cleaning, and the sludge generated from the neutralization of the cleaning wastewater with the desulfurizing agent or coal ash is solidified as a solid to allow solid-liquid separation, whereby the amount of impurities such as ash dust flowing into the desulfurization absorption liquid may be reduced, and a purity of by-produced gypsum in the desulfurization/absorption tower may be improved.

### Brief Description of Drawings

FIG. 1 is a diagram illustrating an exhaust gas treatment system that neutralizes cleaning wastewater from an exhaust gas heat recovery device to which the present invention is applied in a limestone slurry tank, and supplies it to a wet desulfurization device together with limestone slurry.

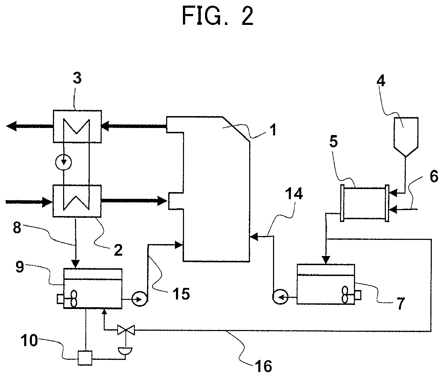

FIG. 2 is a diagram illustrating an exhaust gas treatment system that supplies limestone slurry to a cleaning wastewater tank storing the cleaning wastewater from the exhaust gas heat recovery device to which the present invention is applied while monitoring a pH thereof to neutralize the same, and supplies it to the wet desulfurization device.
FIG. 3 is a diagram illustrating an exhaust gas treatment system that adds limestone supplied from a limestone silo into the cleaning wastewater tank storing the cleaning wastewater from the exhaust gas heat recovery device to which the present invention is applied to neutralize the same, and supplies both the neutralized cleaning wastewater and the limestone to the wet desulfurization device as a slurry.

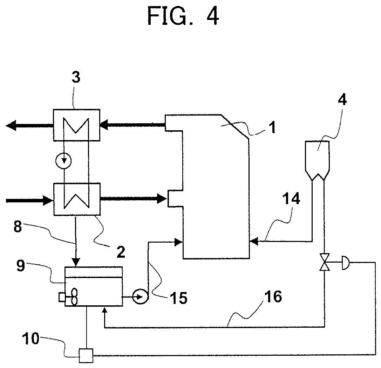

FIG. 4 is a diagram illustrating an exhaust gas treatment system that supplies powdered limestone supplied from a finely powdered limestone silo to the cleaning wastewater tank storing the cleaning wastewater from the exhaust gas heat recovery device to which the present invention is applied while monitoring a pH thereof to neutralize the same, and supplies it to the wet desulfurization device, and then directly supplies the powdered limestone to the wet desulfurization device.
FIG. 5 is a diagram illustrating a conventional technology, in which wastewater from an exhaust gas heat recovery device cleaning is supplied to a wet desulfurization device, and an alkaline agent supply device is installed in a desulfurization/absorption tower as a backup measure when a decrease in a reactivity of limestone occurs.

### Description of Embodiments

An embodiment of the present invention will be described with reference to the drawings. The configuration and operation common to the related art are as mentioned above.

FIG. 1 is a diagram illustrating an embodiment of a system for treating cleaning wastewater from a gas cooler to which the present invention is applied. In the system for treating wastewater from a gas cooler cleaning, an exhaust gas heat recovery device 2 is installed in an exhaust gas flow passage at a front stage of a wet desulfurization device 1. Exhaust gas heat recovered by the exhaust gas heat recovery device 2 is used for reheating an exhaust gas by the exhaust gas reheating device 3 installed at a rear stage of the wet desulfurization device 1.

Limestone is stored in a limestone silo 4, is sent from the limestone silo 4 to a wet ball mill 5, is mixed with industrial water 6 and crushed, and then is supplied to a limestone slurry tank (desulfurizing agent storage tank) 7. Limestone slurry in the limestone slurry tank 7 is supplied to the wet desulfurization device 1 to be used for desulfurizing the exhaust gas.

The wastewater from the exhaust gas heat recovery device 2 cleaning is supplied to the limestone slurry tank 7 and is neutralized by a large excess of limestone in the limestone slurry tank 7. By neutralization of limestone slurry, an aluminum component eluted from coal ashes in the cleaning wastewater is solidified. At this time, the limestone slurry does not contain a fluorine component, and even when the cleaning wastewater is supplied to the limestone slurry tank 7, masking of the limestone does not occur. In addition, since the cleaning wastewater is neutralized in the limestone slurry tank 7, even when supplying from a first desulfurizing agent supply path 14 to the wet desulfurization device 1, a local decrease in a pH of a desulfurization absorption liquid does not occur, and a reaction between the aluminum component and the fluorine component in the desulfurization absorption liquid may also be suppressed.

Another embodiment of the present invention will be described with reference to FIG. 2.

In the exhaust gas treatment system of the embodiment illustrated in FIG. 2, the exhaust gas heat recovery device 2 is installed in the exhaust gas flow passage at the front stage of the wet desulfurization device 1, and the exhaust gas heat recovered by the exhaust gas heat recovery device 2 is used for reheating the exhaust gas by the exhaust gas reheating device 3 installed at the rear stage of the wet desulfurization device 1. In addition, limestone stored in the limestone silo 4 is sent from the limestone silo 4 to a wet ball mill 5, is mixed with industrial water 6 and crushed, and then is supplied to the limestone slurry tank (desulfurizing agent storage tank) 7. The limestone slurry in the limestone slurry tank 7 is supplied from the first desulfurizing agent supply path 14 to the wet desulfurization device 1 to be used for desulfurizing the exhaust gas.

In addition, a cleaning wastewater tank 9 which receives the wastewater from the exhaust gas heat recovery device 2 cleaning is provided, and the finely powdered limestone from the wet ball mill 5 or the limestone slurry from the limestone slurry tank 7 is supplied from a third desulfurizing agent supply path 16 to the tank 9 to be neutralized in the cleaning wastewater tank 9.

The supply of the limestone slurry to the cleaning wastewater tank 9 is executed while monitoring the pH by a pH meter 10 so as to prevent a decrease in the pH of the desulfurization absorption liquid from occurring by supplying the cleaning wastewater from a second desulfurizing agent supply path 15 to the wet desulfurization device 1.

In the exhaust gas treatment system illustrated in FIG. 2, ash dust brought by the cleaning wastewater from the exhaust gas heat recovery device 2 and the sludge generated during pH adjustment by the limestone slurry in the cleaning wastewater tank 9 are not separated, and are supplied to desulfurization/absorption tower 1. However, a solid-liquid separating means (not illustrated) may be provided in the cleaning wastewater tank 9 or separately from the cleaning wastewater tank 9 to allow solid-liquid separation, and only the liquid may be supplied to the wet desulfurization device 1 as a desulfurization absorption liquid. In this case, an amount of impurities such as ash dust, etc. flowing into the desulfurization absorption liquid may be reduced, and the purity of the by-produced gypsum in the desulfurization/absorption tower 1 may be improved as compared with the related art.

FIG. 3 is a diagram illustrating an embodiment of an exhaust gas treatment system to which the present invention is applied in the case of dry feeding of the limestone.

Depending on the plant, in order to receive the limestone, which is used as a desulfurizing agent, as a fine powder, a limestone crushing equipment such as the wet mill 5 illustrated in FIG. 1, etc. may not be installed. In this case, the supply of limestone to the wet desulfurization device 1 may not be in the form of slurry, but a means (for dry feeding) which is performed in a state of finely powdered limestone may be employed.

In FIG. 3, a finely powdered limestone slurry tank (desulfurizing agent storage tank) 7 for receiving finely powdered limestone and industrial water 6 supplied from the limestone silo 4 to the wet desulfurization device 1 is provided, and the wastewater from the exhaust gas heat recovery device 2 cleaning is received by the finely powdered limestone slurry tank 7 via a cleaning wastewater supply path 8.

The finely powdered limestone supplied from the limestone silo 4 to the wet desulfurization device 1 and the industrial water 6 are supplied to the finely powdered limestone slurry tank 7, thus to prepare slurry while neutralizing in the cleaning wastewater supply path 8, and the slurry is supplied to the wet desulfurization device 1. Since the cleaning wastewater is neutralized by the finely powdered limestone supplied in a large excess in the finely powdered limestone slurry tank 7, the aluminum component (Al) eluted from the coal ash in the cleaning wastewater is solidified. In addition, even when the cleaning wastewater is supplied to the wet desulfurization device 1, a local decrease in the pH of the desulfurization absorption liquid does not occur, and the reaction between the aluminum component (Al) and the fluorine component (F) in the desulfurization absorption liquid may be suppressed, such that masking of the limestone does not occur.

FIG. 4 is a diagram illustrating an embodiment of an exhaust gas treatment system to which the present invention is applied in the case of dry feeding of the limestone.

In FIG. 4, finely powdered limestone is supplied from the limestone silo 4 to the cleaning wastewater tank 9 which receives the cleaning wastewater from the exhaust gas heat recovery device 2 to neutralize the cleaning wastewater in the cleaning wastewater tank 9. The supply of the finely powdered limestone is executed while monitoring the pH by the pH meter 10, so as to prevent a decrease in the pH of the desulfurization absorption liquid from occurring by supplying the cleaning wastewater from the cleaning wastewater tank 9 to the wet desulfurization device 1.

In FIG. 4, ash dust brought by the cleaning wastewater from the exhaust gas heat recovery device 2 and the sludge generated during the pH adjustment by finely powdered limestone in the limestone slurry in the cleaning wastewater tank 9 are not separated, and are supplied to the wet desulfurization device (desulfurization/absorption tower) 1. However, the solid-liquid separating means (not illustrated) may be provided in the cleaning wastewater tank 9 or separately from the cleaning wastewater tank 9 to allow solid-liquid separation, and only the liquid may be supplied to the wet desulfurization device 1. In this case, an amount of impurities such as ash dust, etc. flowing into the desulfurization absorption liquid may be reduced, and the purity of the by-produced gypsum in desulfurization/absorption tower may be improved as compared with the related art.

### Description of Reference Numerals

1 Wet desulfurization device
2 Exhaust gas heat recovery device
3 Exhaust gas reheating device
4 Limestone silo
5 Wet ball mill
6 Industrial water
7 Limestone slurry tank
8 Cleaning wastewater supply path
9 Cleaning wastewater tank
10 pH meter
11 Alkaline agent addition device
12 Alkaline agent
14 First desulfurizing agent supply path
15 Second desulfurizing agent supply path
16 Third desulfurizing agent supply path

## Claims

1. A method for removing sulfur oxide from a combustion exhaust gas, in which the combustion exhaust gas is cooled by a gas cooler (2), and then comes into gas-liquid contact with a spray desulfurizing agent in a desulfurization/absorption tower (1), a method for treating wastewater from a gas cooler cleaning comprising:
cleaning the gas cooler (2) with cleaning water; and
neutralizing the wastewater obtained from the gas cooler cleaning with a desulfurizing agent including slurry-like limestone or finely powdered limestone prior to desulfurizing the sulfur oxide in the combustion exhaust gas.

2. The method for treating wastewater from a gas cooler cleaning according to claim 1, wherein an amount of the desulfurizing agent to be mixed with the wastewater from the gas cooler (2) cleaning is based on a pH of the wastewater from the gas cooler cleaning after mixing.

3. The method for treating wastewater from a gas cooler cleaning according to claim 1 or 2, wherein a mixture of the wastewater from the gas cooler (2) cleaning and the desulfurizing agent is continuously supplied to the desulfurization/absorption tower (1).

4. The method for treating wastewater from a gas cooler cleaning according to any one of claims 1 to 3, further comprising: continuously supplying the wastewater after removing solids contained in the mixture of the cleaning wastewater and the desulfurizing agent after the wastewater from the gas cooler (2) cleaning is neutralized with the desulfurizing agent to desulfurization/absorption tower (1).

5. A device for treating wastewater from a gas cooler cleaning comprising:
a gas cooler (2) configured to cool a combustion exhaust gas;
a desulfurizing agent storage tank (7) configured to store a desulfurizing agent including slurry-like limestone for desulfurizing the combustion exhaust gas cooled by the gas cooler (2);
a limestone crushing mill (5) configured to crush the limestone; and
a desulfurization/absorption tower (1) configured to spray a desulfurization absorption liquid containing the desulfurizing agent supplied from the desulfurizing agent storage tank (7) via a first desulfurizing agent supply path (14) to bring it into gas-liquid contact with the combustion exhaust gas, and further comprising:
a cleaning wastewater tank (9) configured to store the wastewater resulted from the gas cooler (2) cleaned with cleaning water;
a third desulfurizing agent supply path (16) configured to supply the desulfurizing agent from the limestone crushing mill (5) or from the desulfurizing agent storage tank (7) to the cleaning wastewater tank (9) while adjusting a pH thereof; and
a second desulfurizing agent supply path (15) configured to supply a mixture of the wastewater from the gas cooler cleaning and the desulfurizing agent from the cleaning wastewater tank (9) to the desulfurization/absorption tower (1).

6. The device for treating wastewater from a gas cooler cleaning according to claim 5, wherein a solid-liquid separator configured to separate sludge discharged from the cleaning wastewater tank (9) after the pH adjustment is provided in the cleaning wastewater tank (9) or separately from the cleaning wastewater tank (9).

7. A device for treating wastewater from a gas cooler cleaning comprising:
a gas cooler (2) configured to cool a combustion exhaust gas;
a desulfurizing agent storage tank (7) configured to store a desulfurizing agent including slurry-like limestone or finely powdered limestone for desulfurizing the combustion exhaust gas cooled by the gas cooler (2); and
a desulfurization/absorption tower (1) configured to spray a desulfurization absorption liquid containing the desulfurizing agent supplied from the desulfurizing agent storage tank (7) via a first desulfurizing agent supply path (14) to bring it into gas-liquid contact with the combustion exhaust gas, and further comprising:
a cleaning wastewater supply path (8) configured to supply the wastewater resulted from the gas cooler (2) cleaned with cleaning water to the desulfurizing agent storage tank (7).

8. A device for treating wastewater from a gas cooler cleaning comprising:
a gas cooler (2) configured to cool a combustion exhaust gas;
a finely powdered limestone silo (4) configured to store finely powdered limestone for desulfurizing the combustion exhaust gas cooled by the gas cooler (2); and
a desulfurization/absorption tower (1) configured to spray the finely powdered limestone supplied from the finely powdered limestone silo (4) via a first desulfurizing agent supply path (14) as a desulfurizing agent to bring it into gas-liquid contact with the combustion exhaust gas, and further comprising:
a cleaning wastewater tank (9) configured to store the wastewater resulted from the gas cooler (2) cleaned with cleaning water;
a third desulfurizing agent supply path (16) provided to supply the finely powdered limestone from the finely powdered limestone silo (4) to the cleaning wastewater tank (9) while adjusting a pH thereof; and
a second desulfurizing agent supply path (15) configured to supply a mixture of the cleaning wastewater from the cleaning wastewater tank (9) and the finely powdered limestone to the desulfurization/absorption tower (1).

9. The device for treating wastewater from a gas cooler cleaning according to claim 8, wherein a solid-liquid separator configured to separate sludge discharged from the cleaning wastewater tank (9) after the pH adjustment is provided in the cleaning wastewater tank (9) or separately from the cleaning wastewater tank (9).

## Amended claims

### Amended claims under Art. 19.1 PCT

**1.** A method for removing sulfur oxide from a combustion exhaust gas, in which the combustion exhaust gas is cooled by a gas cooler (2), and then comes into gas-liquid contact with a spray desulfurizing agent in a desulfurization/absorption tower (1), a method for treating wastewater from a gas cooler cleaning comprising:
cleaning the gas cooler (2) with cleaning water;
neutralizing the wastewater obtained from the gas cooler cleaning with a desulfurizing agent including slurry-like limestone or finely powdered limestone prior to desulfurizing the sulfur oxide in the combustion exhaust gas; and
continuously supplying the wastewater after removing solids contained in the mixture of the cleaning wastewater and the desulfurizing agent after the wastewater from the gas cooler (2) cleaning is neutralized with the desulfurizing agent to desulfurization/absorption tower (1).

**2.** The method for treating wastewater from a gas cooler cleaning according to claim 1, wherein an amount of the desulfurizing agent to be mixed with the wastewater from the gas cooler (2) cleaning is based on a pH of the wastewater from the gas cooler cleaning after mixing.

**3.** The method for treating wastewater from a gas cooler cleaning according to claim 1 or 2, wherein a mixture of the wastewater from the gas cooler (2) cleaning and the desulfurizing agent is continuously supplied to the desulfurization/absorption tower (1).

**5.** A device for treating wastewater from a gas cooler cleaning comprising:
a gas cooler (2) configured to cool a combustion exhaust gas;
a desulfurizing agent storage tank (7) configured to store a desulfurizing agent including slurry-like limestone for desulfurizing the combustion exhaust gas cooled by the gas cooler (2);
a limestone crushing mill (5) configured to crush the limestone; and
a desulfurization/absorption tower (1) configured to spray a desulfurization absorption liquid containing the desulfurizing agent supplied from the desulfurizing agent storage tank (7) via a first desulfurizing agent supply path (14) to bring it into gas-liquid contact with the combustion exhaust gas, and further comprising:
a cleaning wastewater tank (9) configured to store the wastewater resulted from the gas cooler (2) cleaned with cleaning water;
a third desulfurizing agent supply path (16) configured to supply the desulfurizing agent from the limestone crushing mill (5) or from the desulfurizing agent storage tank (7) to the cleaning wastewater tank (9) while adjusting a pH thereof; and
a second desulfurizing agent supply path (15) configured to supply a mixture of the wastewater from the gas cooler cleaning and the desulfurizing agent from the cleaning wastewater tank (9) to the desulfurization/absorption tower (1).

**6.** The device for treating wastewater from a gas cooler cleaning according to claim 5, wherein a solid-liquid separator configured to separate sludge discharged from the cleaning wastewater tank (9) after the pH adjustment is provided in the cleaning wastewater tank (9) or separately from the cleaning wastewater tank (9).

**8.** A device for treating wastewater from a gas cooler cleaning comprising:
a gas cooler (2) configured to cool a combustion exhaust gas;
a finely powdered limestone silo (4) configured to store finely powdered limestone for desulfurizing the combustion exhaust gas cooled by the gas cooler (2); and
a desulfurization/absorption tower (1) configured to spray the finely powdered limestone supplied from the finely powdered limestone silo (4) via a first desulfurizing agent supply path (14) as a desulfurizing agent to bring it into gas-liquid contact with the combustion exhaust gas, and further comprising:
a cleaning wastewater tank (9) configured to store the wastewater resulted from the gas cooler (2) cleaned with cleaning water;
a third desulfurizing agent supply path (16) provided to supply the finely powdered limestone from the finely powdered limestone silo (4) to the cleaning wastewater tank (9) while adjusting a pH thereof; and
a second desulfurizing agent supply path (15) configured to supply a mixture of the cleaning wastewater from the cleaning wastewater tank (9) and the finely powdered limestone to the desulfurization/absorption tower (1).

**9.** The device for treating wastewater from a gas cooler cleaning according to claim 8, wherein a solid-liquid separator configured to separate sludge discharged from the cleaning wastewater tank (9) after the pH adjustment is provided in the cleaning wastewater tank (9) or separately from the cleaning wastewater tank (9).
